# EUROPEAN PATENT APPLICATION

(11) **EP 4 647 296 A1**
(43) Date of publication of application: **12.11.2025**
(21) Application number: 24863835.5
(22) Date of filing: 06.11.2024
(51) Int. Cl.: B60N 2/28

(54) **ELECTRIC SEAT ROTATION LOCKING STRUCTURE AND MODE AND CHILD SAFETY SEAT**

(30) Priority: 12.03.2024 CN 202410281078
(71) Applicant: Ningbo Baby First Baby Products Co., Ltd., Ningbo, Zhejiang 315400 (CN)
(72) Inventor: ZHOU, Xiaolin, Ningbo, Zhejiang 315400 (CN)
(74) Representative: Santarelli
(86) International application number: PCT/CN2024/130055
(87) International publication number: WO 2025/189787

(57) **Abstract**

This invention provides an electric rotating locking structure, method, and child safety seat, including a base, rotating disk, rotating assembly, rotating positioning locking assembly, circuit board, first signal sensor, second signal sensor, and third signal sensor. Through the drive of the power assembly, this invention enables the rotating disk to rotate relative to the base, and controls the locking state of the rotating positioning locking assembly via the lock release motor. The locking pin engages with the first angle detent hole and the second angle detent hole respectively to lock the rotating disk in its initial position and desired adjusted position. By controlling the first signal sensor, second signal sensor, and third signal sensor, it ensures that the seat is only locked when it has fully reached the desired position during electric rotation, achieving accurate locking of the rotating disk in the required adjusted position. This improves the safety of the child safety seat, with a simple and reliable structure, high production yield, low noise, and smooth and orderly seat rotation operation.

## Description

### Technical Field

This invention relates to the field of automotive safety products technology, specifically to an electric rotating locking structure, method, and child safety seat.

### Background Art

With the continuous upgrading of consumer demands, more and more parents are beginning to pay attention to the safety of children riding in child seats, and are putting forward higher requirements for the convenience of seat operation, such as electric control of seat rotation structures. However, the existing electric seat rotation structures on the market may have issues with rotation not being fully in place, resulting in the seat not being able to lock properly, causing concern among consumers.

### Summary of the Invention

To solve at least one aspect of the above problems, this invention first provides an electric rotating locking structure for a seat, including a base, rotating disk, rotating assembly, rotating positioning locking assembly, circuit board, and a third signal sensor triggered by the rotating disk. The rotating disk is rotatably connected to the base, and the rotating assembly, rotating positioning locking assembly, and third signal sensor are all connected to the base. The rotating positioning locking assembly includes a locking pin, lock release switch, lock release motor, and a first signal sensor triggered by the locking pin. The rotating disk is provided with a first angle detent hole and a second angle detent hole, which are adapted to cooperate alternatively with the locking pin. When the locking pin cooperates with the first angle detent hole to lock, the rotating disk is in the initial position; when the locking pin cooperates with the second angle detent hole to lock, the rotating disk is in the desired adjusted position. The rotating assembly includes a power assembly and a second signal sensor triggered by the lock release switch. The lock release motor, first signal sensor, power assembly, second signal sensor, and third signal sensor are all electrically connected to the circuit board. The power assembly is transmission-connected to the rotating disk to drive the rotating disk to rotate relative to the base.

Optionally, the first angle detent hole (51) and the second angle detent hole (52) are spaced apart from each other, and the rotating disk is also provided with a third angle detent hole, which is located between the first angle detent hole and the second angle detent hole.

Optionally, the power assembly includes a rotating motor and a driving gear connected to each other, and the rotating disk is provided with a toothed ring meshing with the driving gear.

Optionally, the rotating positioning locking assembly includes a mounting base, the first signal sensor and the second signal sensor are both installed inside the mounting base, the locking pin and the lock release switch are both movably installed inside the mounting base.

Optionally, the rotating positioning locking assembly also includes a reset component installed inside the mounting base, the two ends of the reset component are connected to the mounting base and the locking pin respectively.

Optionally, the locking pin is provided with a toggling block suitable for abutting against the lock release switch, when the lock release switch rotates to abut against the toggling block, it can push the locking pin to move so that the locking pin disengages from the first angle detent hole; when the lock release switch disengages from the toggling block and the locking pin aligns with the second angle detent hole of the rotating disk, the locking pin resets and springs out under the force of the reset component to engage with the second angle detent hole for locking.

Optionally, the lock release switch is provided with a first guiding surface, the toggling block is provided with a second guiding surface, when the locking pin completely disengages from the first angle detent hole, the first guiding surface abuts against the second guiding surface; when the lock release switch rotates again, the first guiding surface can slide relative to the second guiding surface to make the lock release switch disengage from the toggling block.

Compared to the prior art, the electric rotating locking structure for a seat in this invention, through the drive of the power assembly, enables the rotating disk to rotate relative to the base, and controls the locking state of the rotating positioning locking assembly via the lock release motor. The locking pin engages with the first angle detent hole and the second angle detent hole respectively to lock the rotating disk in its initial position and desired adjusted position. By controlling the first signal sensor, second signal sensor, and third signal sensor, it ensures that the seat is only locked when it has fully reached the desired position during electric rotation, achieving accurate locking of the rotating disk in the required adjusted position. This improves the safety of the child safety seat, with a simple and reliable structure, high production yield, low noise, and smooth and orderly seat rotation operation.

Additionally, this invention provides an electric rotating locking method for a seat based on the aforementioned electric rotating locking structure, including the steps: When the rotating disk is in the initial position, the locking pin engages with the first angle detent hole of the rotating disk for locking; When a preset rotation angle signal is received, control the lock release motor to start working to drive the lock release switch to rotate, and the lock release switch disengages from the second signal sensor; The lock release switch pushes the locking pin to retract. When the locking pin triggers the first signal sensor, control the lock release motor to stop working. At this time, the locking pin disengages from the first angle detent hole, and control the power assembly to start working to drive the rotating disk to rotate; After the rotating disk rotates for a period of time, control the lock release motor to start working to drive the lock release switch to rotate. The lock release switch disengages from the locking pin until the lock release switch triggers the second signal sensor, then control the lock release motor to stop working; When the rotating disk rotates to the preset rotation angle, the rotating disk triggers the third signal sensor, control the power assembly to stop working, and the locking pin aligns with the second angle detent hole of the rotating disk, and resets and springs out under the force of the reset component to engage with the second angle detent hole for locking, achieving the adjustment of the rotating disk to the desired adjusted position.

Optionally, after the rotating disk rotates for a period of time, controlling the lock release motor to start working to drive the lock release switch to rotate includes the steps: Determining whether there is a third angle detent hole between the first angle detent hole and the second angle detent hole within the preset rotation angle range of the rotating disk. If not, control the lock release motor to start working after the first angle detent hole and the locking pin are offset; If there is, detect the number of the third angle detent holes. Within the travel range of the rotating disk from the first angle detent hole to the last third angle detent hole, control the third signal sensor to power off. After passing the last third angle detent hole, control the third signal sensor to power on, and control the lock release motor to start working.

Compared to the prior art, the advantages of this invention's electric rotating locking method for a seat are the same as those of the aforementioned electric rotating locking structure for a seat compared to the prior art, and will not be repeated here.

Additionally, this invention also provides a child safety seat, including the aforementioned electric rotating locking structure for a seat.

Compared to the prior art, the advantages of this invention's child safety seat are the same as those of the aforementioned electric rotating locking structure for a seat compared to the prior art, and will not be repeated here.

### Brief Description of the Drawings

In order to more clearly describe the technical solutions of the embodiments of the present invention, the accompanying drawings required in the embodiments will be described briefly below. It should be understood that the following accompanying drawings illustrate only some embodiments of the present invention and therefore should not be construed as a limitation on the scope thereof. For a person of ordinary skill in the art, other relevant accompanying drawings can also be obtained from these accompanying drawings without any creative effort.
Figure 1 is an exploded view of the electric rotating locking structure for a seat in this invention's embodiment;
Figure 2 is an exploded view of the rotating positioning locking assembly in this invention's embodiment;
Figure 3 is a perspective view of the electric rotating locking structure for a seat in this invention's embodiment when the rotating disk is in the initial position;
Figure 4 is an internal structure diagram of the rotating positioning locking assembly when the rotating disk is in the initial position in this invention's embodiment;
Figure 5 is an internal structure diagram of the rotating positioning locking assembly when the lock release motor starts working and drives the lock release switch to rotate in this invention's embodiment;
Figure 6 is an internal structure diagram of the rotating positioning locking assembly when the lock release switch pushes the locking pin to move until it triggers the first signal sensor in this invention's embodiment;
Figure 7 is a perspective view of the electric rotating locking structure for a seat in this invention's embodiment when the rotating disk is between the initial position and the desired adjusted position;
Figure 8 is an internal structure diagram of the rotating positioning locking assembly when the lock release motor starts working again and drives the lock release switch to rotate until it triggers the second signal sensor after the rotating disk has rotated for a period of time in this invention's embodiment;
Figure 9 is a perspective view of the electric rotating locking structure for a seat in this invention's embodiment when the rotating disk is in the desired adjusted position;
Figure 10 is an internal structure diagram of the rotating positioning locking assembly before the rotating disk reaches the desired adjusted position in this invention's embodiment;
Figure 11 is a sectional view of the electric rotating locking structure for a seat in this invention's embodiment;
Figure 12 is a partial structural diagram of the rotating disk cooperating with the third signal sensor in another embodiment of this invention.

List of reference numerals: 1 - base; 2 - rotating positioning locking assembly; 21 - locking pin; 211 - toggling block; 212 - second guiding surface; 22 - lock release switch; 221 - first guiding surface; 23 - lock release motor; 24 - first signal sensor; 25 - mounting base; 26 - reset component; 3 - rotating assembly; 31 - power assembly; 311 - rotating motor; 312 - driving gear; 32 - second signal sensor; 4 - third signal sensor; 5 - rotating disk; 51 - first angle detent hole; 52 - second angle detent hole; 53 - toothed ring.

### Detailed Description of Embodiments

To make the above objectives, features, and advantages of this invention more apparent and easier to understand, detailed descriptions of specific embodiments of this invention will be given below in conjunction with the figures.

In the description of this invention, it should be understood that terms such as "up", "down", etc. indicate orientations or positional relationships based on the normal use of the product.

The terms "first", "second" are used only for descriptive purposes and should not be understood as indicating or implying relative importance or implicitly specifying the number of technical features indicated. Thus, features defined as "first", "second" may explicitly or implicitly include at least one such feature.

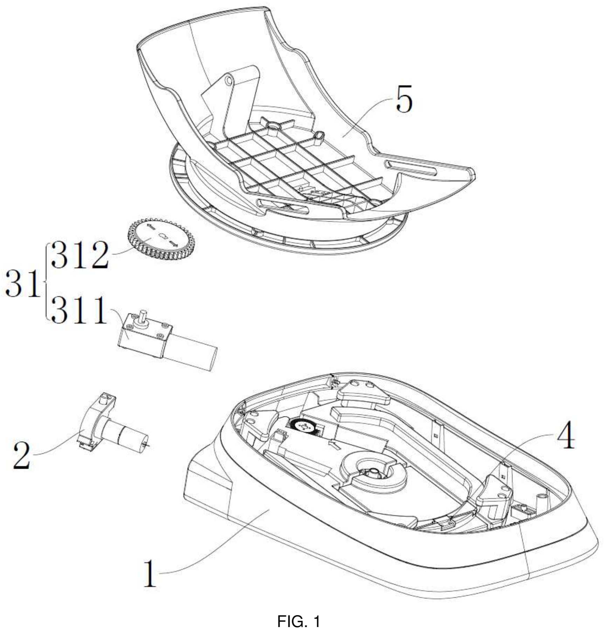

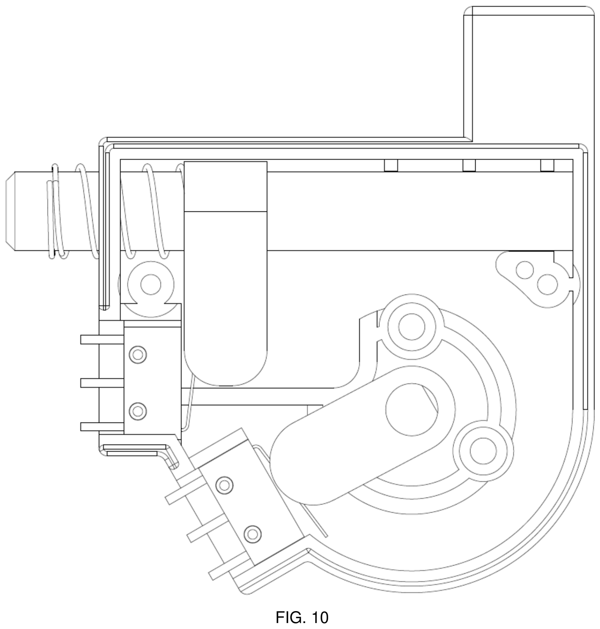

This embodiment of the invention provides an electric rotating locking structure for a seat. As shown in Figures 1 to 10, it includes a base 1, a rotating disk 5, a rotating assembly 3, a rotating positioning locking assembly 2, a circuit board, and a third signal sensor 4 triggered by the rotating disk 5. The rotating disk 5 is rotatably connected to the base 1, and the rotating assembly 3, the rotating positioning locking assembly 2, and the third signal sensor 4 are all connected to the base 1. The rotating positioning locking assembly 2 includes a locking pin 21, a lock release switch 22, a lock release motor 23, and a first signal sensor 24 triggered by the locking pin 21. The rotating disk 5 is provided with a first angle detent hole 51 and a second angle detent hole 52. The first angle detent hole 51 and the second angle detent hole 52 are adapted to cooperate alternatively with the locking pin 21. When the locking pin 21 cooperates with the first angle detent hole 51 to lock, the rotating disk 5 is in the initial position; when the locking pin 21 cooperates with the second angle detent hole 52 to lock, the rotating disk 5 is in the desired adjusted position. The rotating assembly 3 includes a power assembly 31 and a second signal sensor 32 triggered by the lock release switch 22. The lock release motor 23, the first signal sensor 24, the power assembly 31, the second signal sensor 32, and the third signal sensor 4 are all electrically connected to the circuit board. The power assembly 31 is transmission-connected to the rotating disk 5 to drive the rotating disk 5 to rotate relative to the base 1.

The base 1 is fixedly connected to the car seat to provide stable support; the rotating disk 5 is connected to the base 1 through an axle, allowing it to rotate around the axis, facilitating children getting in and out of the seat and freeing the operator's hands; the power assembly 31 can be a motor or other rotary drive device, which achieves the rotation function through its transmission connection with the rotating disk 5; in this embodiment, the power assembly 31 preferably includes a rotating motor 311 and a driving gear 312 connected to each other, the rotating disk 5 is provided with a toothed ring 53 meshing with the driving gear 312, achieving the rotation of the rotating disk 5 through the meshing of the toothed ring 53 and the driving gear 312, with a simple and reliable structure, and the diameter of the driving gear 312 is smaller than that of the toothed ring 53, making the transmission more efficient, which can increase the torque of the rotating motor 311, achieving the purpose of high torque with a small motor.

The first angle detent hole 51 and the second angle detent hole 52 are preferably spaced apart from each other. Besides this, the first angle detent hole 51 and the second angle detent hole 52 can also be in the same position, such as when activating the seat's welcome mode, that is, when the seat needs to rotate a certain angle from the initial position corresponding to the first angle detent hole 51 and then rotate back to the initial position corresponding to the second angle detent hole 52. In this case, it is equivalent to the first angle detent hole 51 and the second angle detent hole 52 being in the same position, which means that the initial position and the desired adjusted position can be the same position, but the seat needs to have a rotation action during the process of switching from the initial position to the desired adjusted position.

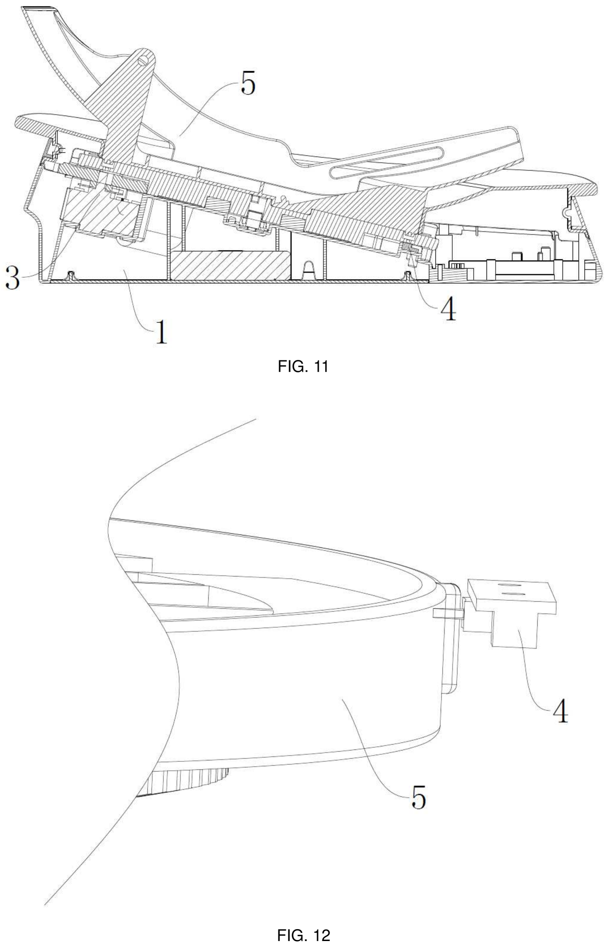

The locking pin 21 can be inserted into or withdrawn from the angle detent holes on the rotating disk 5, thereby locking or releasing the rotating disk 5; the third signal sensor 4 is preferably installed on the base 1, providing feedback on the seat's rotation status by sensing the position of the rotating disk 5, and the third signal sensor 4 will only be triggered when the locking pin 21 aligns with the second angle detent hole 52; the circuit board is used to control the coordinated operation of the lock release motor 23, first signal sensor 24, power assembly 31, second signal sensor 32, and third signal sensor 4. The first signal sensor 24 and the second signal sensor 32 are preferably micro switches, and the third signal sensor 4 is preferably an infrared sensor; in addition, as shown in Figure 12, the third signal sensor 4 can also be a micro switch. The circuit board can be powered by a battery pack or by an external power source through a power inlet.

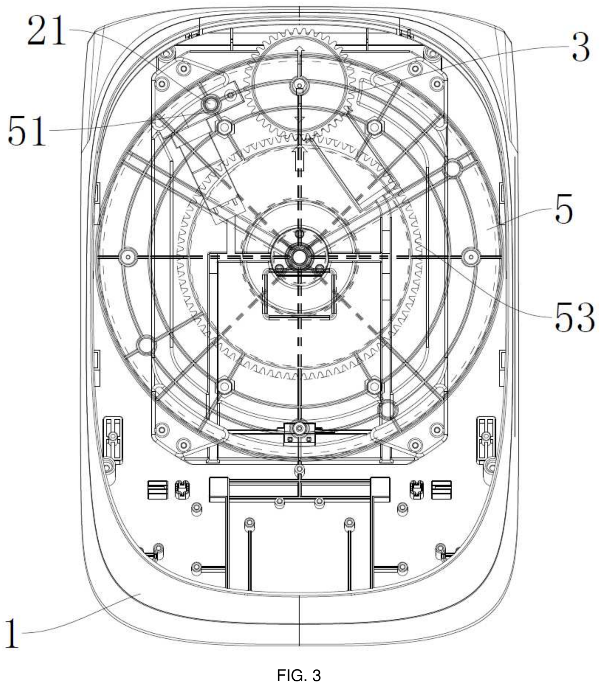

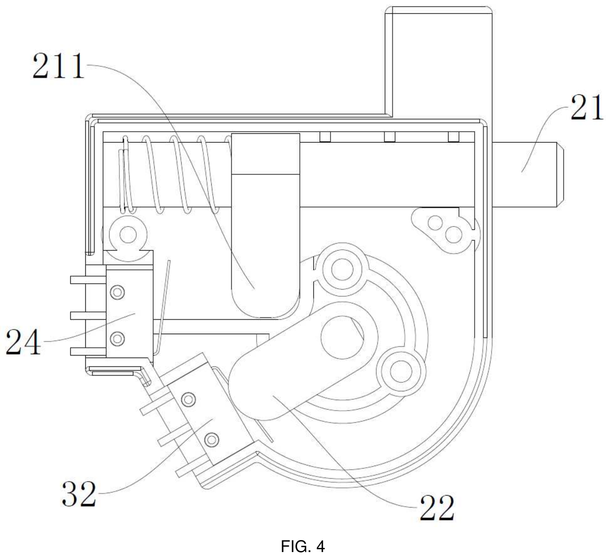

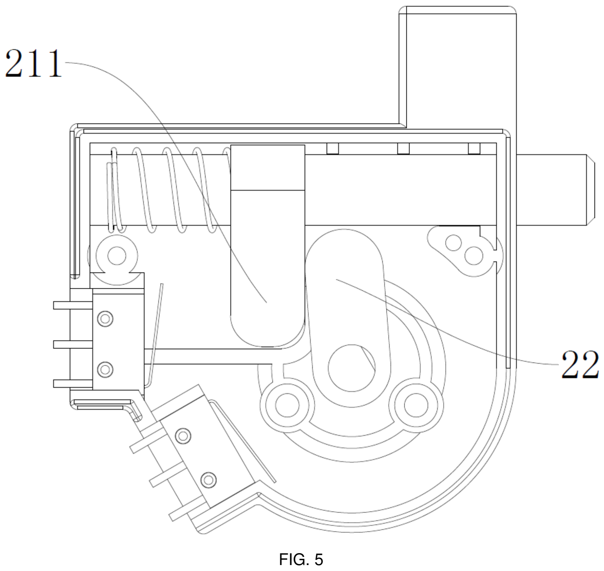

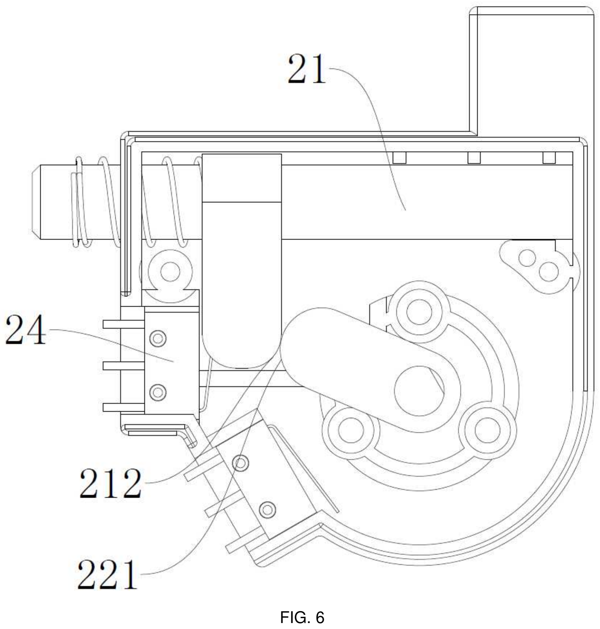

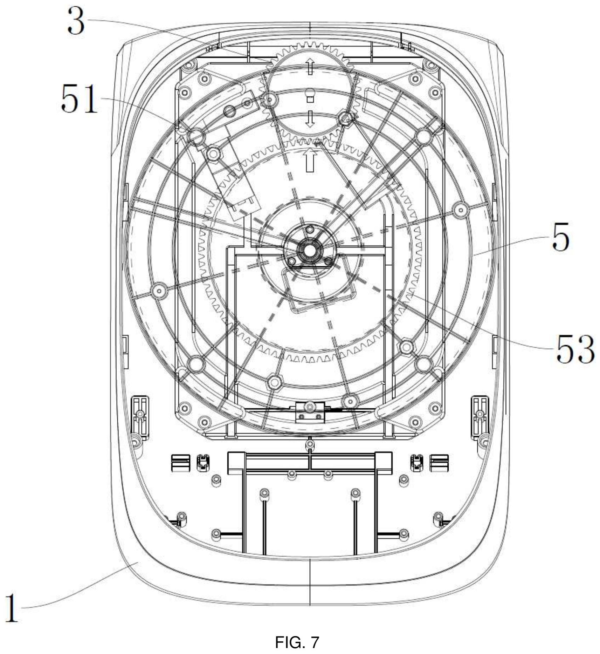

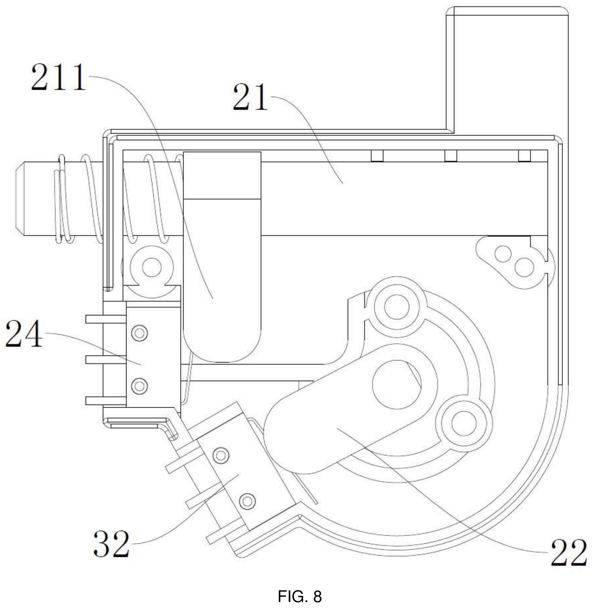

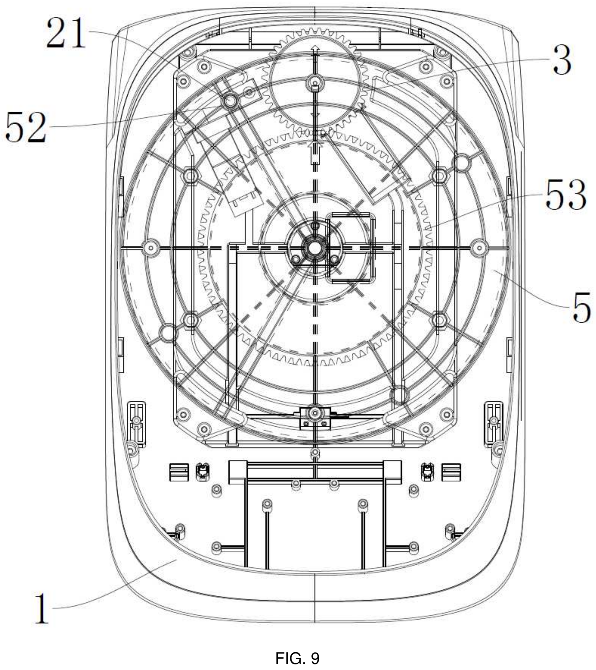

As shown in Figures 3 and 4, when the rotating disk 5 is in the initial position, the first signal sensor 24 is not triggered, the second signal sensor 32 is triggered by the lock release switch 22, and both the lock release motor 23 and rotating motor 311 are in a stopped state. When a preset rotation angle signal is received, the lock release motor 23 starts working and drives the lock release switch 22 to rotate, with neither the first signal sensor 24 nor the second signal sensor 32 being triggered. As shown in Figures 5 and 6, the lock release switch 22 rotates to push the locking pin 21 to retract. When the locking pin 21 disengages from the first angle detent hole 51, it triggers the first signal sensor 24, while the second signal sensor 32 remains untriggered. The lock release motor 23 stops working to keep the lock release switch 22 restraining the position of the locking pin 21, and the rotating motor 311 starts working to drive the rotating disk 5 to rotate. After the rotating disk 5 rotates for a period of time, the lock release motor 23 starts working again to drive the lock release switch 22 to rotate. The locking pin 21 is released from the restraint of the lock release switch 22, but under the heavy pressure of the rotating disk 5, the locking pin 21 still maintains contact with the first signal sensor 24. As shown in Figures 7 and 8, when the lock release switch 22 rotates to trigger the second signal sensor 32, the lock release motor 23 stops working. The rotating motor 311 continues working to keep driving the rotating disk 5 to rotate, with both the first signal sensor 24 and the second signal sensor 32 remaining triggered. As shown in Figures 9 to 11, when the rotating disk 5 rotates to the desired adjusted position, the third signal sensor 4 is triggered by the rotating disk 5. Before this, the third signal sensor 4 is in an untriggered or powered-off state. The first signal sensor 24 is not triggered, the second signal sensor 32 remains triggered, the rotating motor 311 stops working, and the lock release motor 23 remains in a stopped state. At this point, the locking pin 21 is released from the restraint of the rotating disk 5 and instantly resets to insert into the second angle detent hole 52, completing the adjustment of the rotation angle of the rotating disk 5.

In this embodiment of the electric rotating locking structure for a seat, through the drive of the power assembly 31, the rotating disk 5 rotates relative to the base 1, and through the control of the lock release motor 23, the locking state of the rotating positioning locking assembly 2 is controlled. The locking pin 21 cooperates with the first angle detent hole 51 and the second angle detent hole 52 respectively to lock the rotating disk 5 in its initial position and desired adjusted position. By controlling the first signal sensor 24, second signal sensor 32, and third signal sensor 4, it ensures that the seat is only locked when it has fully reached the desired position during electric rotation, achieving accurate locking of the rotating disk 5 in the required adjusted position. This improves the safety of the child safety seat, with a simple and reliable structure, high production yield, low noise, and smooth and orderly seat rotation operation.

Optionally, the rotating disk 5 is also provided with a third angle detent hole, which is located between the first angle detent hole 51 and the second angle detent hole 52; the first angle detent hole 51, second angle detent hole 52, and third angle detent hole are circumferentially spaced on the rotating disk 5; by providing a third angle detent hole on the rotating disk 5, users can choose to rotate the seat to an intermediate position between the initial position and the desired adjusted position, increasing the angle adjustment options of the rotating disk 5 to meet different usage scenarios or user needs.

Optionally, as shown in Figures 1, 2, and 4, the rotating positioning locking assembly 2 includes a mounting base 25, the first signal sensor 24 and the second signal sensor 32 are both installed inside the mounting base 25, the locking pin 21 and the lock release switch 22 are both movably installed inside the mounting base 25. The first signal sensor 24, second signal sensor 32, locking pin 21, and lock release switch 22 are installed inside the mounting base 25, integrating part of the components of the seat's electric rotating locking structure in a unified base to ensure they can move flexibly during seat rotation, improving the compactness and coordination of the entire structure, and also helping to simplify the assembly process and improve system stability. The rotating positioning locking assembly 2 also includes a mounting cover that connects with the mounting base 25, allowing the first signal sensor 24, second signal sensor 32, locking pin 21, and lock release switch 22 to be enclosed and installed inside the mounting base 25, preventing external interference.

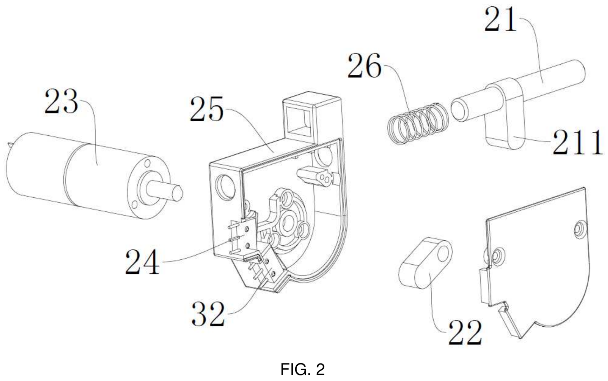

Optionally, as shown in Figures 2 and 4, the rotating positioning locking assembly 2 also includes a reset component 26 installed inside the mounting base 25, the two ends of the reset component 26 are connected to the mounting base 25 and the locking pin 21 respectively; the reset component 26 is preferably a compression spring, allowing the locking pin 21 to achieve instant reset and spring out under the spring force of the reset component 26, with a simple and reliable structure.

Optionally, as shown in Figures 1, 2, and 3, the locking pin 21 is provided with a toggling block 211 suitable for abutting against the lock release switch 22, when the lock release switch 22 rotates to abut against the toggling block 211, it can push the locking pin 21 to move so that the locking pin 21 disengages from the first angle detent hole 51; when the lock release switch 22 disengages from the toggling block 211 and the locking pin 21 aligns with the second angle detent hole 52 of the rotating disk 5, the locking pin 21 resets and springs out under the force of the reset component 26 to engage with the second angle detent hole 52 for locking.

The toggling block 211 is set perpendicular to the movement direction of the locking pin 21, allowing the toggling block 211 to effectively trigger the first signal sensor 24. Through the interaction between the lock release switch 22 and the locking pin 21, flexible locking and releasing during the seat's electric rotation process is achieved. The abutment of the lock release switch 22 against the toggling block 211 allows the locking pin 21 to correctly disengage from the first angle detent hole 51, and reset to the second angle detent hole 52 after the lock release switch 22 disengages from the toggling block 211, ensuring the seat is correctly locked in the desired adjusted position.

Optionally, as shown in Figure 6, the lock release switch 22 is provided with a first guiding surface 221, the toggling block 211 is provided with a second guiding surface 212, when the locking pin 21 completely disengages from the first angle detent hole 51, the first guiding surface 221 abuts against the second guiding surface 212; when the lock release switch 22 rotates again, the first guiding surface 221 can slide relative to the second guiding surface 212 to make the lock release switch 22 disengage from the toggling block 211. Both the first guiding surface 221 and the second guiding surface 212 are arc-shaped surfaces, ensuring a smooth transition between them. The guiding surface design between the lock release switch 22 and the toggling block 211 allows for controlled guiding and disengagement during the unlocking process. Through the sliding of the lock release switch 22 and its disengagement from the toggling block 211, the seat's electric rotating locking structure can flexibly complete the release of the locking pin 21, ensuring that the locking pin 21 correctly engages with the second angle detent hole 52 when needed.

Another embodiment of this invention provides an electric rotating locking method for a seat based on the aforementioned electric rotating locking structure. As shown in Figures 3 to 11, it includes the following steps:
When the rotating disk 5 is in the initial position, the locking pin 21 engages with the first angle detent hole 51 of the rotating disk 5 for locking; where this initial position refers to the starting position for each seat rotation angle adjustment, not a fixed position relative to the base 1; similarly, the first angle detent hole 51 is not a fixed hole, but refers to the angle detent hole that initially engages with the locking pin 21 during each seat rotation angle adjustment; this embodiment describes the seat's electric rotating locking method for a single seat rotation angle adjustment process, and the seat's electric rotating locking method for subsequent seat rotation angle adjustments repeats the same steps, which will not be described again;

When a preset rotation angle signal is received, control the lock release motor 23 to start working to drive the lock release switch 22 to rotate, and the lock release switch 22 disengages from the second signal sensor 32; where the preset rotation angle signal is input by the user, which can be through physical buttons, touch keys, voice control, or APP input control set on the seat;

The lock release switch 22 pushes the locking pin 21 to retract. When the locking pin 21 triggers the first signal sensor 24, control the lock release motor 23 to stop working. At this time, the locking pin 21 disengages from the first angle detent hole 51, and control the power assembly 31 to start working to drive the rotating disk 5 to rotate;

After the rotating disk 5 rotates for a period of time, control the lock release motor 23 to start working to drive the lock release switch 22 to rotate. The lock release switch 22 disengages from the locking pin 21 until the lock release switch 22 triggers the second signal sensor 32, then control the lock release motor 23 to stop working;

When the rotating disk 5 rotates to the preset rotation angle, the rotating disk 5 triggers the third signal sensor 4, control the power assembly 31 to stop working, and the locking pin 21 aligns with the second angle detent hole 52 of the rotating disk 5, and resets and springs out under the force of the reset component 26 to engage with the second angle detent hole 52 for locking, achieving the adjustment of the rotating disk 5 to the desired adjusted position.

The electric rotating locking method for a seat in this embodiment, through the drive of the power assembly 31, enables the rotating disk 5 to rotate relative to the base 1, and controls the locking state of the rotating positioning locking assembly 2 via the lock release motor 23. The locking pin 21 engages with the first angle detent hole 51 and the second angle detent hole 52 respectively to lock the rotating disk 5 in its initial position and desired adjusted position. By controlling the first signal sensor 24, second signal sensor 32, and third signal sensor 4, it ensures that the seat is only locked when it has fully reached the desired position during electric rotation, achieving accurate locking of the rotating disk 5 in the required adjusted position. This improves the safety of the child safety seat, with a simple and reliable structure, high production yield, low noise, and smooth and orderly seat rotation operation.

Optionally, after the rotating disk 5 rotates for a period of time, controlling the lock release motor 23 to start working to drive the lock release switch 22 to rotate includes the steps:
Determining whether there is a third angle detent hole between the first angle detent hole 51 and the second angle detent hole 52 within the preset rotation angle range of the rotating disk 5. If not, control the lock release motor 23 to start working after the first angle detent hole 51 and the locking pin 21 are offset, in order to drive the lock release switch 22 to rotate, making the lock release switch 22 disengage from the restraint on the locking pin 21; where the offset between the first angle detent hole 51 and the locking pin 21 is to ensure that the locking pin 21 does not re-insert into the first angle detent hole 51;

If there is, detect the number of the third angle detent holes. Within the travel range of the rotating disk 5 from the first angle detent hole 51 to the last third angle detent hole, control the third signal sensor 4 to power off, ensuring that the lock release switch 22 continuously restrains the position of the locking pin 21, preventing the locking pin 21 from accidentally inserting into the third angle detent hole; after passing the last third angle detent hole, control the third signal sensor 4 to power on, and control the lock release motor 23 to start working, in order to drive the lock release switch 22 to rotate, making the lock release switch 22 disengage from the restraint on the locking pin 21, preparing for the locking pin 21 to insert into the second angle detent hole 52, that is, when the third signal sensor 4 is triggered, the locking pin 21 aligns exactly with the second angle detent hole 52, achieving accurate engagement and locking between the locking pin 21 and the second angle detent hole 52.

Another embodiment of this invention provides a child safety seat, including the aforementioned electric rotating locking structure for a seat.

The electric rotating locking structure for a seat in this embodiment, through the drive of the power assembly 31, enables the rotating disk 5 to rotate relative to the base 1, and controls the locking state of the rotating positioning locking assembly 2 via the lock release motor 23. The locking pin 21 engages with the first angle detent hole 51 and the second angle detent hole 52 respectively to lock the rotating disk 5 in its initial position and desired adjusted position. By controlling the first signal sensor 24, second signal sensor 32, and third signal sensor 4, it ensures that the seat is only locked when it has fully reached the desired position during electric rotation, achieving accurate locking of the rotating disk 5 in the required adjusted position. This improves the safety of the child safety seat, with a simple and reliable structure, high production yield, low noise, and smooth and orderly seat rotation operation.

Although the disclosure has been described as above, the scope of protection of this disclosure is not limited to this. Those skilled in the art can make various changes and modifications without departing from the spirit and scope of this disclosure, and these changes and modifications will all fall within the protection scope of this invention.

## Claims

1. An electric rotating locking structure for a seat, **characterized by** comprising a base (1), a rotating disk (5), a rotating assembly (3), a rotating positioning locking assembly (2), a circuit board, and a third signal sensor (4) triggered by the rotating disk (5), wherein the rotating disk (5) is rotatably connected to the base (1), and the rotating assembly (3), the rotating positioning locking assembly (2), and the third signal sensor (4) are all connected to the base (1); the rotating positioning locking assembly (2) includes a locking pin (21), a lock release switch (22), a lock release motor (23), and a first signal sensor (24) triggered by the locking pin (21), the rotating disk (5) is provided with a first angle detent hole (51) and a second angle detent hole (52), the first angle detent hole (51) and the second angle detent hole (52) are adapted to cooperate alternatively with the locking pin (21), when the locking pin (21) cooperates with the first angle detent hole (51) to lock, the rotating disk (5) is in the initial position, when the locking pin (21) cooperates with the second angle detent hole (52) to lock, the rotating disk (5) is in the desired adjusted position; the rotating assembly (3) includes a power assembly (31) and a second signal sensor (32) triggered by the lock release switch (22), the lock release motor (23), the first signal sensor (24), the power assembly (31), the second signal sensor (32), and the third signal sensor (4) are all electrically connected to the circuit board, the power assembly (31) is transmission-connected to the rotating disk (5) to drive the rotating disk (5) to rotate relative to the base (1).

2. The electric rotating locking structure for a seat according to claim 1, **characterized in that** the first angle detent hole (51) and the second angle detent hole (52) are spaced apart from each other, and the rotating disk (5) is also provided with a third angle detent hole, which is located between the first angle detent hole (51) and the second angle detent hole (52).

3. The electric rotating locking structure for a seat according to claim 1, **characterized in that** the power assembly (31) includes a rotating motor (311) and a driving gear (312) connected to each other, and the rotating disk (5) is provided with a toothed ring (53) meshing with the driving gear (312).

4. The electric rotating locking structure for a seat according to any one of claims 1-3, **characterized in that** the rotating positioning locking assembly (2) includes a mounting base (25), the first signal sensor (24) and the second signal sensor (32) are both installed inside the mounting base (25), the locking pin (21) and the lock release switch (22) are both movably installed inside the mounting base (25).

5. The electric rotating locking structure for a seat according to claim 4, **characterized in that** the rotating positioning locking assembly (2) also includes a reset component (26) installed inside the mounting base (25), the two ends of the reset component (26) are connected to the mounting base (25) and the locking pin (21) respectively.

6. The electric rotating locking structure for a seat according to claim 5, **characterized in that** the locking pin (21) is provided with a toggling block (211) suitable for abutting against the lock release switch (22), when the lock release switch (22) rotates to abut against the toggling block (211), it can push the locking pin (21) to move so that the locking pin (21) disengages from the first angle detent hole (51); when the lock release switch (22) disengages from the toggling block (211) and the locking pin (21) aligns with the second angle detent hole (52) of the rotating disk (5), the locking pin (21) resets and springs out under the force of the reset component (26) to engage with the second angle detent hole (52) for locking.

7. The electric rotating locking structure for a seat according to claim 6, **characterized in that** the lock release switch (22) is provided with a first guiding surface (221), the toggling block (211) is provided with a second guiding surface (212), when the locking pin (21) completely disengages from the first angle detent hole (51), the first guiding surface (221) abuts against the second guiding surface (212); when the lock release switch (22) rotates again, the first guiding surface (221) can slide relative to the second guiding surface (212) to make the lock release switch (22) disengage from the toggling block (211).

8. An electric rotating locking method for a seat based on the electric rotating locking structure according to any one of claims 1-7, **characterized by** including the steps:
when the rotating disk (5) is in the initial position, the locking pin (21) engages with the first angle detent hole (51) of the rotating disk (5) for locking;
when a preset rotation angle signal is received, control the lock release motor (23) to start working to drive the lock release switch (22) to rotate, and the lock release switch (22) disengages from the second signal sensor (32);
the lock release switch (22) pushes the locking pin (21) to retract; when the locking pin (21) triggers the first signal sensor (24), control the lock release motor (23) to stop working; at this time, the locking pin (21) disengages from the first angle detent hole (51), and control the power assembly (31) to start working to drive the rotating disk (5) to rotate;
after the rotating disk (5) rotates for a period of time, control the lock release motor (23) to start working to drive the lock release switch (22) to rotate; the lock release switch (22) disengages from the locking pin (21) until the lock release switch (22) triggers the second signal sensor (32), then control the lock release motor (23) to stop working;
when the rotating disk (5) rotates to the preset rotation angle, the rotating disk (5) triggers the third signal sensor (4), control the power assembly (31) to stop working, and the locking pin (21) aligns with the second angle detent hole (52) of the rotating disk (5), and resets and springs out under the force of the reset component (26) to engage with the second angle detent hole (52) for locking, achieving the adjustment of the rotating disk (5) to the desired adjusted position.

9. The electric rotating locking method for a seat according to claim 8, **characterized in that** after the rotating disk (5) rotates for a period of time, controlling the lock release motor (23) to start working to drive the lock release switch (22) to rotate includes the steps:
determining whether there is a third angle detent hole between the first angle detent hole (51) and the second angle detent hole (52) within the preset rotation angle range of the rotating disk (5);
if not, control the lock release motor (23) to start working after the first angle detent hole (51) and the locking pin (21) are offset;
if there is, detect the number of the third angle detent holes; within the travel range of the rotating disk (5) from the first angle detent hole (51) to the last third angle detent hole, control the third signal sensor (4) to power off; after passing the last third angle detent hole, control the third signal sensor (4) to power on, and control the lock release motor (23) to start working.

10. A child safety seat, **characterized by** comprising the electric rotating locking structure for a seat according to any one of claims 1-7.
